Europäisches Patentamt

(19) **European Patent Office**

**Office européen des brevets**

(11) Publication number: **0 153 199 B1**

## EUROPEAN PATENT SPECIFICATION

(45) Date of publication of patent specification: **17.06.92**

(51) Int. Cl.⁵: **B29C 61/00**, C08L 23/06, //B29K23:00

(21) Application number: **85301158.3**

(22) Date of filing: **21.02.85**

(54) Recoverable polyethylene composition and article.

(30) Priority: **21.02.84 US 582105**

(43) Date of publication of application:
**28.08.85 Bulletin 85/35**

(45) Publication of the grant of the patent:
**17.06.92 Bulletin 92/25**

(84) Designated Contracting States:
**AT BE CH DE FR GB IT LI NL SE**

(56) References cited:
**CA-A- 1 147 133**
**GB-A- 1 095 772**

(73) Proprietor: **RAYCHEM CORPORATION (a Delaware corporation)**
**300 Constitution Drive**
**Menlo Park, California 94025(US)**

(72) Inventor: **Resenzweig, Nachum**
**3440 Bryant Street**
**Palo Alto California 94306(US)**

(74) Representative: **Benson, John Everett et al**
**Raychem Limited Intellectual Property Law**
**Department Faraday Road Dorcan**
**Swindon, Wiltshire SN3 5HH(GB)**

Rank Xerox (UK) Business Services

## Description

This invention relates to the field of recoverable polymeric compositions and more particularly relates to the field of recoverable polyethylenes.

Of the commercially available polyethylenes, there is increasing interest in a special class of these polymers known as ultra-high-molecular-weight polyethylenes. Ultra-high-molecular-weight polyethylenes, or UHMWPE, are generally considered to have a molecular weight in excess of 3 million. A molecular weight of 3 million or more can be defined according to ASTM D-4020-81, wherein the relative viscosity should be 2.3 or more. The interest in UHMWPE results from their superiority with respect to mechanical and impact properties and abrasion and chemical resistance when compared to conventional polyethylenes.

One reference which describes an application of UHMWPE is CA-A-1147133. This discloses a process in which a tube of UHMWPE is warmed, slightly expanded, placed while warm over a roller, and then cooled so that it contracts into close contact with the roller. The tube and roller are used as a support for a conveyor belt. There is no disclosure of cross-linking the UHMWPE.

Certain of the polyethylenes may be imparted with shape memory. Crosslinking, either by chemical curing or by radiation, improves the shape memory of the polyethylenes. Work on very high molecular weight polyethylenes has been previously disclosed in GB-A-1,095,772. In this reference, polyethylenes having a molecular weight in excess 1 million were crosslinked and compared against non-crosslinked polyethylenes of similar molecular weight. Certain mechanical properties of both groups of polyethylenes were measured at temperatures above their respective melting points.

A true measure of the effectiveness of shape memory is the recovery force. Recovery force can be characterized by stress relaxation behaviour as determined by a stress relaxation test. In this test, a sample is stretched at constant strain rate to a particular length and then with the strain rate set at zero, the stress as a function of time is measured.

It is desirable to have a recoverable material with a higher recovery force as a function of time than is currently recognized or available. The British reference failed to appreciate the value of recovery force and, further, considered only very high molecular weight polyethylenes rather than ultra-high-molecular-weight polyethylenes.

Thus, it is an object of this invention to have a recoverable polyethylene having a high recovery force.

It is another object of this invention to have a recoverable polyethylene having a high recovery force which is suitable for use as an engineering material.

The invention provides a process for the preparation of a heat-recoverable article comprising

(1) crosslinking an article composed of a composition comprising polyethylene which has a relative viscosity of 2.3 or more and a molecular weight greater than about 3.0 million, as defined by ASTM D-4020-81; and

(2) expanding the crosslinked article.

The invention also provides heat recoverable articles directly obtained by processes according to the present invention, and recovered articles made by recovering such heat recoverable articles.

As examples, the recoverable articles made by process of the present invention may be a tubular coupling having an inside diameter or a shrink ring having an inside diameter. The crosslinking of the polyethylene may be accomplished by any of the known methods such as by radiation or by chemical curing. The preferred crosslinking method is by radiation.

Embodiments of the present invention will now be described, by way of example, with references to the accompanying drawings, wherein:

Figure 1 illustrates stress relaxation curves for the polyethylene of the present invention in the unbeamed (non-irradiated) condition;

Figure 2 illustrates stress relaxation curves for the polyethylene of the present invention in the beamed condition;

Figure 3 illustrates the stress relaxation curves of Figure 2 on a larger time scale; and

Figure 4 is similar to figure 2 but illustrates another aspect of the invention.

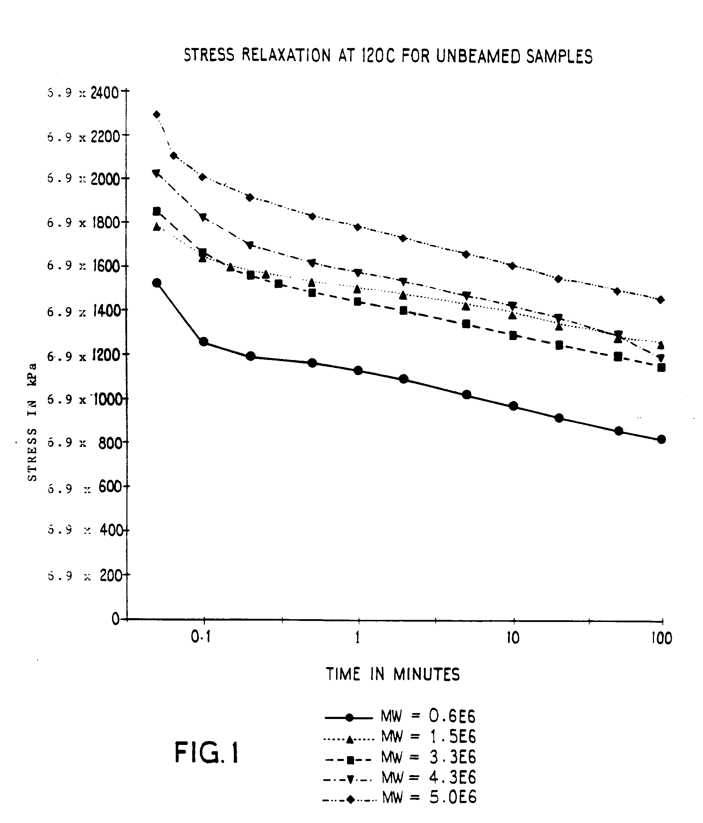

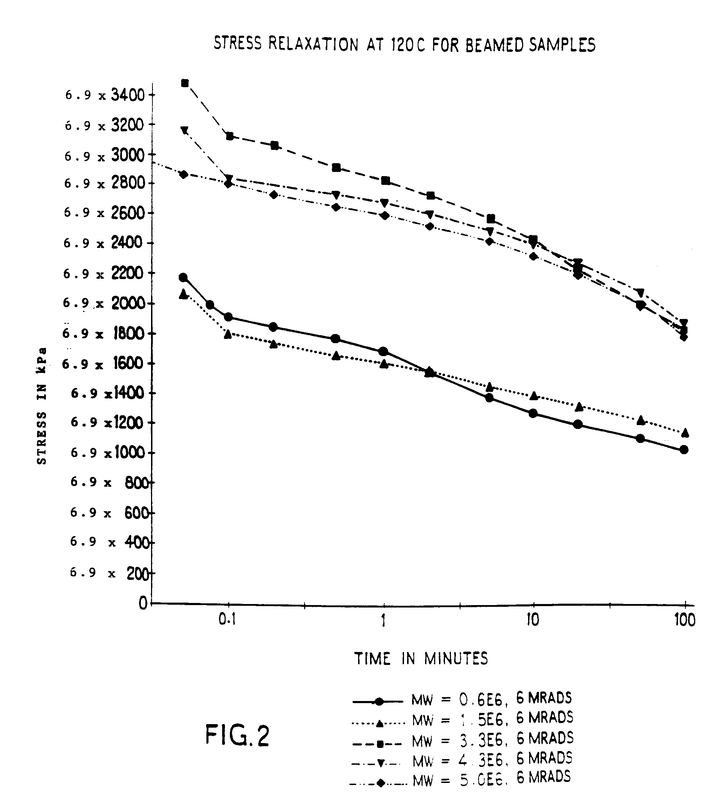

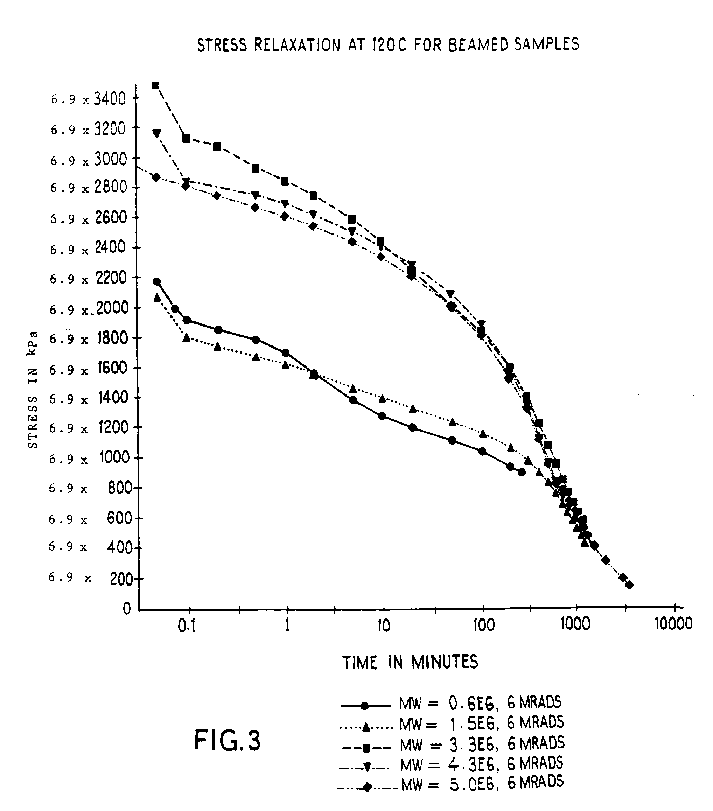

Referring to the drawings, Figure 1 illustrates stress relaxation curves for various polyethylenes ranging in molecular weight from .6 million to 5.0 million. Polyethylene tensile specimens in the unbeamed state were cut cut of a UHMWPE sheet. The tensile specimens were subjected to tensile tests on an Instron with the crosshead speed set at 12.7 cm (5 inches) per minute. When the crossheads moved from a separation distance of 3.0 cm (1.2 inches) to 10.7 cm (4.2 inches), so that a 2.5 cm (1 inch) length on the tensile speciman became 8.9 cm (3.5 inches), the strain rate of the Instron was set at zero. Then the stress as a function of time was measured and plotted. The tests were conducted at a temperature of 120° C. As illustrated in the figure, most of the specimens are grouped together in the same range, the exception being the .6 million molecular weight specimen which stands off by itself. Similar specimens were prepared but were subjected to irradiation so as to become crosslinked. The results of the testing of these specimens are shown in Figs. 2 and 3. Once the specimens have been beamed, it is clear that the polyethy-lenes can now be grouped into two distinct categories: those polyethylenes less than about 1.5 million in molecular weight and those polyethylenes greater than about 3.0 million in molecular weight. This large disparity between the two groups of polyethylenes was totally surprising and unexpected. Further, the gap cannot be accounted for solely by the differences in molecular weight of the material.

Stress relaxation is an important parameter for these polyethylenes because it is directly indicative of the recovery force of this material. The higher the stress at any given time, then the higher the recovery force. The higher recovery force of this material makes it suitable for uses which were heretofore unknown in the prior art.

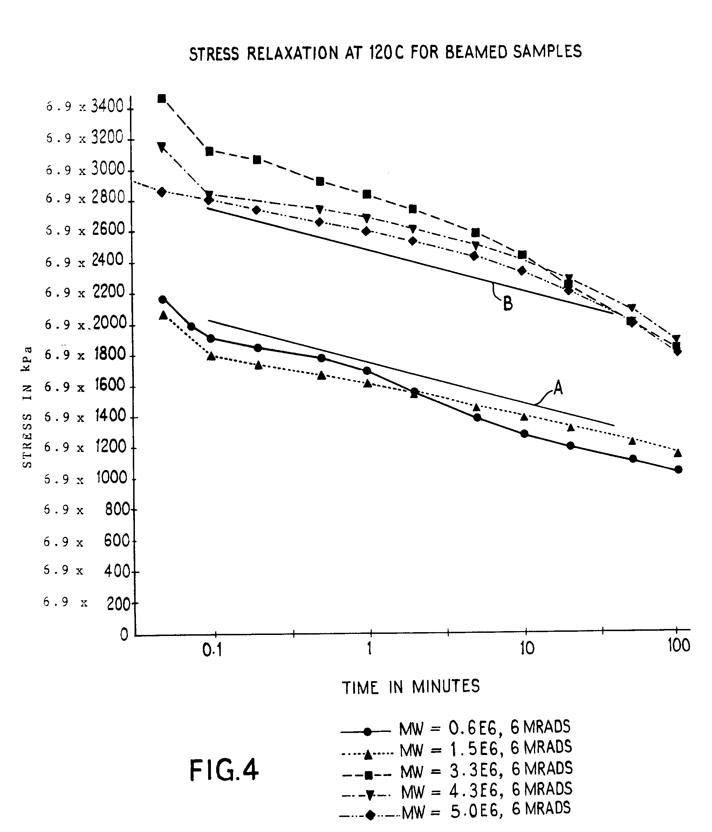

The preferable recovery force may be defined more particularly with reference to Figure 4. Figure 4 is similar to Figure 2 except that Figure 4 now includes two straight lines A and B. Lines A and B approximate the preferred ranges of the recovery force over the times of 0.1 to 30 minutes and at a temperature of 120°C

Line A may be defined by the equation:

$$6.9 \times \text{Recovery Force} = 1750 - 275 . \log (t)$$

where the recovery force is the stress (kPa) at any unit of time and t is the time in minutes. Line A actually describes the lower limit of one preferred range of recovery force. Thus it is preferred that at any unit of time and at 120°C., the recovery force should be above line A.

Line B may be defined by the equation:

$$6.9 \times \text{Recovery Force} = 2474 - 275 . \log (t)$$

where, again, the recovery force is the stress (kPa) at any unit of time and t is the time in minutes. Line B, however, describes the more preferred range of recovery force. It is most preferred that at any unit of time and at 120°C, the recovery force whould be above line B.

It is also preferred that articles made according to the present invention be recovered by an external heat source. The heat source may either be in the form of an intense source such as a torch or in a more general form such as oven heating. In any case, an evenly distributed heat flux which does not over heat the surface is needed in order to assure a high quality product.

It is preferable that the process comprises expanding at or below the melting point of the composition. More prefer ably, the composition should be expanded within the temperature range of room temperature to about 140°C. The melting point of these polyethylenes is actually a melting range which extends from about 130°C - 140°C. 140°C is considered to be the upper end of the tempera-

ture range at which the material will be at least partially crystalline. Even more preferably, the composition should be expanded within a temperature range of room temperature to 125°C

It has been found that the lower the temperature at which expansion occurs, the higher will be the recovery force. The lower end of the temperature range at which expansion can occur will be limited only by the force available to expand the composition. It can be appreciated that the lower the expansion temperature, the stronger will be the forces resisting expansion. When the material is expanded part of these forces resisting expansion become the driving force for recovery. At the same time, stress relaxation tends to deplete this driving force. However, since stress relaxation decreases with decreasing temperature, the effect of stress relaxation will likewise decrease with decreasing temperature. Thus, since at lower temperatures stress relaxation is at a minimum, the net driving force, i.e., the recovery force, will approach a maximum at low temperatures.

It is preferable that the composition be recovered within the temperature range of room temperature to 140°C. More preferably, the composition should be recovered within the temperature range of 75°C to 120°C.

The objects of the invention can best be achieved when the following precepts are followed:

The composition is preferably recovered at a temperature such that the temperature at recovery is always greater than the temperature at expansion. Also the temperature at recovery is preferably at or less than the melting point of the material When these precepts are adhered to, it is found that the recovery force is at a maximum.

It can thus be seen that the instant invention diverges completely from the teaching of the aforementioned British reference where the temperatures of expansion and recovery were above the melting point of the material and the tempera-ture of expansion is greater than the temperature of recovery.

Embodiments of the present invention will now be described, by way of example, with reference to the following examples.

Example 1

The composition of the present invention was prepared in the following manner:

The resin Hostalen GUR 413, the ultra-high-molecular-weight polyethylene powder, was blended with antioxidants in a high-speed dry blender for about ten minutes. The compound was then loaded into a cylindrical sleeve mold. The compound was compacted in the mold in order to reduce its porosity. The compaction pressure was 100kgf/cm$^2$ at

room temperature for about five minutes. The compacted product was sintered under ambient air at 220°C for thirty minutes. The applied pressure during sintering was 50kgf/cm$^2$.

Subsequent to sintering, the product was cooled in the mold under pressure at 300 kgf/cm$^2$ to about 50°C, at which temperature the mold was opened and the product released. The size of the cylindrical sleeve was two inches in length with a 1.78cm (0.7 inch) inside diameter and a 3.56 cm (1.4 inch) outside diameter.

The product was crosslinked by exposing it to a high-energy electron beam. Dosage was in order of 6 megarads.

The cylindrical sleeve was then expanded at 80°C by a conical mandrel. After expansion, the inside diameter of the cylindrical sleeve was 6.35 cm (2.5 inches). The expansion ratio was 3.57X. The expansion ratio is the ratio of the inside diameter after expansion to the inside diameter before expansion. Subsequent to the expansion, the cylindrical sleeve was stored until ready for use.

Two pipes having 3.8 cm (1.5 inch) outside diameter were then inserted in either end of the cylindrical sleeve so that the cylindrical sleeve would form a coupling. The whole assembly was inserted in an oven and shrunk at 120°C. of course, after shrinking, the inside diameter of the cylindrical sleeve was 3.8"cm (1.5 inch) the same as the outside diameter of the pipes.

The recovery of the polyethylene around the pipes was so secure that the pipes could not be twisted in relation to the coupling. A seal which was gas-tight at 827 KPa (120 psi) was achieved.

Example 2

A second cylindrical sleeve was made according to Example 1. In this case, however, after it had been expanded, the sleeve was sliced into several rings with each ring having a length of about 0.6 cm (one-quarter inch). These rings would now be used as shrink rings. In this case, a rubber sleeve was placed over an electrical connector and then the shrink ring was placed over the rubber sleeve and shrunk at 120°C in an oven. When the shrink ring was shrunk, it provided a water-tight seal so that water was prevented from entering between the rubber sleeve and the electrical connector.

Example 3

A third cylindrical sleeve was made according to Example 1. This sleeve was sliced into sections of about 2.54 cm (1 inch) in length. This 2.54 cm (1 inch) section was then recovered upon a substrate which would then be used as a bearing means. The bearing means would have a bearing surface.

In this case, the outer periphery of the bearing means represents the bearing surface and the recovered polyethylene forms at least a portion of this bearing surface. It has been found that this bearing means may be used as a rotatable article. Due to the high recovery force of the crosslinked polyethylene of this invention, there is no possibility of slippage between the recovered polyethylene and the substrate.

Recoverable articles employing the composition of this invention may be expanded up to about ten times its original inside diameter, although expansion up to eight times its original diameter is much preferred. Modifications may be made within the scope of the claims.

**Claims**

1. A process for the preparation of a heat-recoverable article comprising
   (i) crosslinking an article composed of a composition comprising polyethylene which has a relative viscosity of 2.3 or more and a molecular weight greater than about 3.0 million, as defined by ASTM D-4020-81; and
   (2) expanding the crosslinked article.

2. A process according to claim 1, wherein the crosslinking is carried out by irradiation.

3. A process according to claim 1 or 2, comprising expanding the article at a temperature below the melting point of the composition.

4. A process according to claim 1, 2, or 3 comprising expanding the article at a temperature between room temperature and 140°C, preferably between room temperature and 125°C.

5. A process according to any preceding claim comprising crosslinking polyethylene having a molecular weight of 3.0 to 5.0 million.

6. A process according to any preceding claim, comprising expanding the article up to 8 times.

7. A heat-recovered article, made by recovering a heat recoverable article comprising a crosslinked composition comprising polyethylene which has a relative viscosity of 2.3 or more and a molecular weight greater than about 3.0 million, as defined by ASTM D-4020-81.

8. An article according to claim 7, in combination with a substrate, around which the heat-recoverable article has been recovered.

9. An article in combination with a substrate according to claim 8, wherein the substrate is a pipe or a bearing.

## Revendications

1. Procédé de préparation d'un article doué de reprise dimensionnelle à chaud, consistant :
   (1) à provoquer la réticulation d'un article constitué d'une composition comprenant un polyéthylène qui possède une viscosité relative égale ou supérieure à 2,3 et un poids moléculaire supérieur à environ 3,0 millions, suivant la définition de la norme ASTM D-4020-81 ; et
   (2) à provoquer l'expansion de l'article réticulé.

2. Procédé suivant la revendication 1, dans lequel la réticulation est provoquée par irradiation.

3. Procédé suivant la revendication 1 ou 2, consistant à provoquer l'expansion de l'article à une température inférieure au point de fusion de la composition.

4. Procédé suivant la revendication 1, 2 ou 3, consistant à provoquer l'expansion de l'article à une température comprise dans l'intervalle de la température ambiante à 140°C, de préférence de la température ambiante à 125°C.

5. Procédé suivant l'une quelconque des revendications précédentes, consistant à provoquer la réticulation d'un polyéthylène ayant un poids moléculaire de 3,0 à 5,0 millions.

6. Procédé suivant l'une quelconque des revendications précédentes, consistant à provoquer l'expansion de l'article jusqu'à un taux d'expansion égal à 8.

7. Article ayant subi une reprise dimensionnelle à chaud, produit par reprise dimensionnelle d'un article doué de reprise dimensionnelle à chaud comprenant une composition réticulée renfermant un polyéthylène qui possède une viscosité relative égale ou supérieure à 2,3 et un poids moléculaire supérieur à environ 3,0 millions, suivant la définition de la norme ASTM D-4020-81.

8. Article suivant la revendication 7, en association avec un substrat, autour duquel l'article doué de reprise dimensionnelle à chaud a été soumis à une reprise dimensionnelle.

9. Article associé à un substrat suivant la revendication 8, dans lequel le substrat est un conduit ou un palier.

## Patentansprüche

1. Verfahren zur Herstellung eines wärmerückstellbaren Gegenstands, das folgende Schritte aufweist:
   (i) Vernetzen eines Gegenstands, der aus einer Zusammensetzung besteht, die Polyethylen mit einer relativen Viskosität von 2,3 oder mehr und einem Molekulargewicht von mehr als ca. 3,0 Millionen gemäß der Definition von ASTM D-4020-81 aufweist; und
   (2) Aufweiten des vernetzten Gegenstands.

2. Verfahren nach Anspruch 1, wobei das Vernetzen durch Bestrahlung erfolgt.

3. Verfahren nach Anspruch 1 oder 2, das aufweist: Aufweiten des Gegenstands bei einer Temperatur unter dem Schmelzpunkt der Zusammensetzung.

4. Verfahren nach Anspruch 1, 2 oder 3, das aufweist: Aufweiten des Gegenstands bei einer Temperatur zwischen Raumtemperatur und 140 °C, bevorzugt zwischen Raumtemperatur und 125 °C.

5. Verfahren nach einem der vorhergehenden Ansprüche, das aufweist: Vernetzen von Polyethylen mit einem Molekulargewicht von 3,0-5,0 Millionen.

6. Verfahren nach einem der vorhergehenden Ansprüche, das aufweist: Aufweiten des Gegenstands bis zum 8fachen.

7. Wärmerückgestellter Gegenstand, der hergestellt ist durch Rückstellen eines wärmerückstellbaren Gegenstands, der eine vernetzte Zusammensetzung aufweist, die Polyethylen mit einer relativen Viskosität von 2,3 oder mehr und einem Molekulargewicht von mehr als ca. 3,0 Millionen gemäß der Definition von ASTM D-4020-81 umfaßt.

8. Gegenstand nach Anspruch 7 in Kombination mit einem Substrat, um das herum der wärmerückstellbare Gegenstand rückgestellt worden ist.

9. Gegenstand in Kombination mit einem Substrat nach Anspruch 8, wobei das Substrat ein Rohr oder ein Lager ist.

STRESS RELAXATION AT 120C FOR UNBEAMED SAMPLES

FIG.1

STRESS RELAXATION AT 120C FOR BEAMED SAMPLES

FIG.2

MW = 0.6E6, 6 MRADS
MW = 1.5E6, 6 MRADS
MW = 3.3E6, 6 MRADS
MW = 4.3E6, 6 MRADS
MW = 5.0E6, 6 MRADS

STRESS RELAXATION AT 120C FOR BEAMED SAMPLES

FIG.3

MW = 0.6E6, 6 MRADS
MW = 1.5E6, 6 MRADS
MW = 3.3E6, 6 MRADS
MW = 4.3E6, 6 MRADS
MW = 5.0E6, 6 MRADS

STRESS RELAXATION AT 120C FOR BEAMED SAMPLES

FIG.4

MW = 0.6E6, 6 MRADS
MW = 1.5E6, 6 MRADS
MW = 3.3E6, 6 MRADS
MW = 4.3E6, 6 MRADS
MW = 5.0E6, 6 MRADS